# EUROPÄISCHE PATENTANMELDUNG

(11) **EP 2 974 779 A1**
(43) Veröffentlichungstag der Anmeldung: **20.01.2016**
(21) Anmeldenummer: 15177154.0
(22) Anmeldetag: 04.11.2008
(51) Int. Cl.: B01D 46/24, C04B 35/195, C04B 35/478, C04B 35/565, C04B 38/00, F01N 3/022, C04B 111/00

(54) **DIESELPARTIKELFILTER MIT VERBESSERTEN STAUDRUCKEIGENSCHAFTEN**

(62) Teilanmeldung aus: 11000800.0
(71) Anmelder: Umicore AG & Co. KG, 63457 Hanau-Wolfgang (DE)
(72) Erfinder: DORNHAUS, Franz, 63110 Rodgau (DE); FRANTZ, Stéphanie, Hanau (DE); JESKE, Gerald, 63543 Neuberg (DE)

(57) **Zusammenfassung**

Es wird ein Dieselpartikelfilter vorgestellt, das ein keramisches Wandflußfiltersubstrat und eine in den Anströmkanälen aufgebrachte Beschichtung aus hochschmelzendem Material enthält. Die Beschichtung (6) ist so beschaffen, daß sie die die Anströmkanäle (1) und Abströmkanäle (2) verbindenden Poren (5) in der Wand (4) anströmseitig für Rußpartikel (7) verschließt, ohne dabei den Durchtritt der gasförmigen Abgasbestandteile zu verhindern. Die Beschichtung kann aus einem oder mehreren hochschmelzenden Oxiden oder aus hochschmelzendem Fasermaterial hergestellt werden. In beiden Fällen führt die Beschichtung dazu, daß die Tiefenfiltration deutlich vermindert und somit der während der Tiefenfiltrationsphase zu beobachtende Staudruckanstieg signifikant verringert wird.

## Beschreibung

Die Erfindung betrifft ein Dieselpartikelfilter mit verbesserten Staudruckeigenschaften, das sich zur Entfernung von Dieselruß aus dem Abgas von Dieselmotoren, insbesondere in Fahrzeugen, eignet.

Das Abgas von mit Dieselmotor betriebenen Kraftfahrzeugen enthält neben den Schadgasen Kohlenmonoxid (CO) und Stickoxide (NOₓ) auch Bestandteile, die aus der unvollständigen Verbrennung des Kraftstoffs im Brennraum des Zylinders herrühren. Dazu gehören neben Rest-Kohlenwasserstoffen, die meist ebenfalls überwiegend gasförmig vorliegen, Partikelemissionen, auch als "Dieselruß" oder "Rußpartikel" bezeichnet. Dabei handelt es sich um komplexe Agglomerate aus überwiegend Kohlenstoffhaltigen Feststoff-Teilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

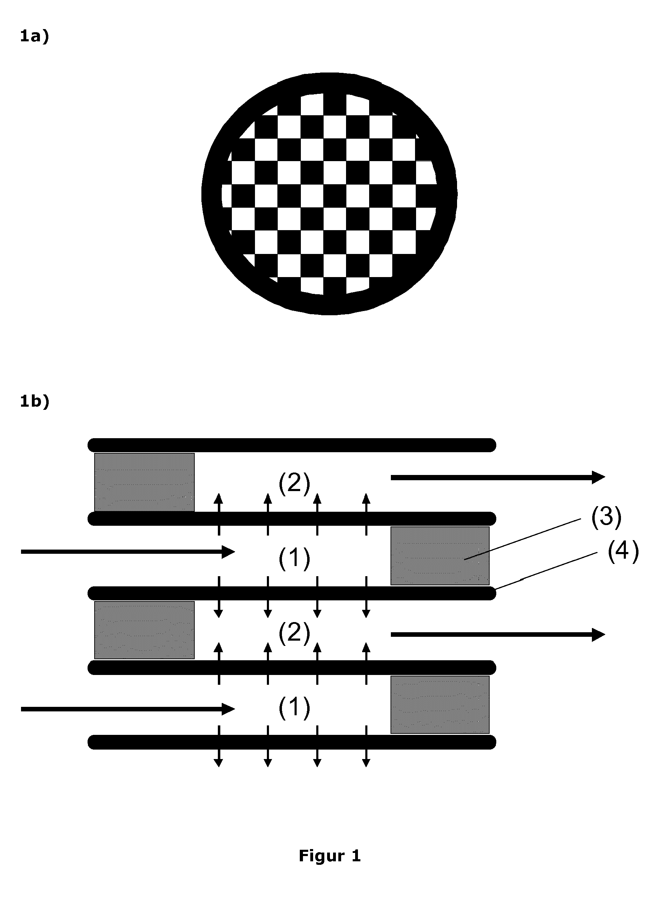

Zur Entfernung dieser Partikelemissionen werden Partikelfilter verwendet. Vor dem Hintergrund der aktuellen Feinstaub-Problematik werden zunehmend keramische Wandflußfiltersubstrate eingesetzt, die sich durch eine hohe Filtereffizienz auch gegenüber kleinen Partikeln auszeichnen. Diese Wandflußfiltersubstrate sind keramische Wabenkörper mit wechselseitig gasdicht verschlossenen An- und Abströmkanälen. Figur 1 zeigt schematisch ein solches Wandflußfiltersubstrat. Das in die Anströmkanäle (1) einströmende Partikel-haltige Abgas wird durch den auf der Austrittsseite befindlichen gasdichten Verschlußstopfen (3) zum Durchtritt durch die poröse Wand (4) gezwungen und tritt aus den auf der Anströmseite verschlossenen Abströmkanälen (2) aus dem Wandflußfiltersubstrat wieder aus. Dabei wird Dieselruß aus dem Abgas herausgefiltert.

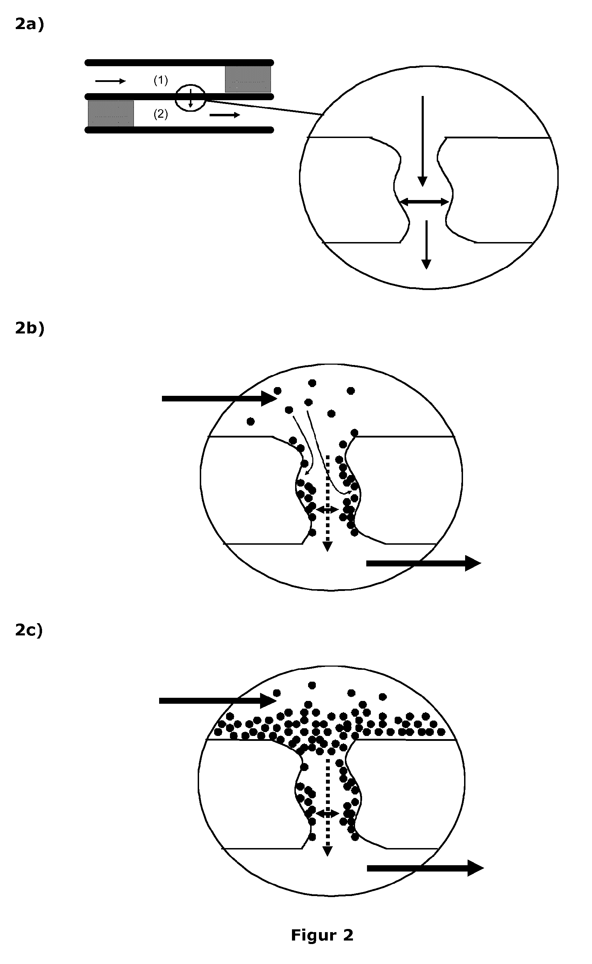

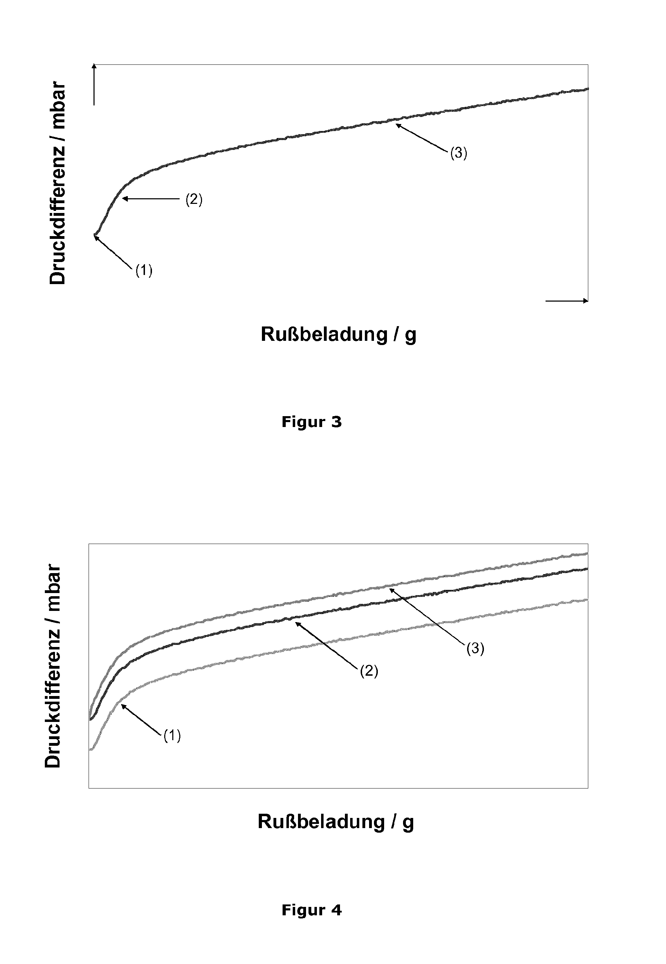

Die Rußfiltration im Wandflußfiltersubstrat beim Durchtritt durch die Wand kann als zweistufiger Vorgang beschrieben werden. In einer ersten Phase, der sogenannten "Tiefenfiltrationsphase" bleiben beim Durchtritt des partikelhaltigen Abgases durch die Wand Rußpartikel in den Poren der Wand haften [Figur 2b]. Dies führt zu einer Verkleinerung des Porendurchmessers in der Wand und infolgedessen zu einem sprunghaften Anstieg des Staudruckes über dem Wandflußfiltersubstrat. Sobald der Porendurchmesser zu stark verringert ist, um mittleren und größeren Rußteilchen den Eintritt in die Pore zu gestatten, setzt eine Filterkuchenbildung [Figur 2c] im gesamten Anströmkanal ein. Während des Aufbaus des Filterkuchens steigt der Staudruck über dem Wandflußfiltersubstrat nur noch linear mit der gefilterten Menge Dieselruß. Figur 3 zeigt schematisch die Entwicklung des Staudruckes über dem Wandflußfilter ausgehend vom rußfreien Filter als Funktion der aufgenommenen Rußmenge. (1) zeigt den Staudruck des unberußten Filters, (2) den Anstieg während der Tiefenfiltrationsphase und (3) die lineare Staudruckzunahme während der Filterkuchenbildungsphase.

Der vorstehend beschriebene zweistufige Vorgang der Rußfiltration im Wandflußfiltersubstrat ist allgemein gültig; er wird bei nicht beschichteten Wandflußfiltersubstraten ebenso beobachtet, wie bei Wandflußfiltersubstraten mit katalytisch aktiver Beschichtung, mit Rußzündbeschichtung oder mit Beschichtungen, die spezielle Ankerstrukturen zur Verbesserung der Filtrationseffizienz aufweisen. Die Ausgangskonfiguration des Wandflußfilters beeinflußt vornehmlich den Ausgangsstaudruck des Bauteils in unberußtem Zustand, wie Figur 4 zu entnehmen ist. Katalytisch beschichtete Wandflußfiltersubstrate oder solche mit einer typischen Rußzündbeschichtung (2) zeigen in unberußtem Zustand einen deutlich höheren Ausgangsstaudruck als unbeschichtete Wandflußfiltersubstrate (1); der Verlauf der Staudruckkurve mit zunehmender Rußbeladung aber ist mit dem Verlauf der Staudruckkurve des unbeschichteten Substrats (1) vergleichbar. Ein Substrat mit einer die Filtrationseffizienz erhöhenden Beschichtung (3) zeigt in der Regel einen Ausgangsstaudruck in unberußtem Zustand, der dem Ausgangsstaudruck von katalytisch beschichteten Wandflußfiltern vergleichbar ist. Der Anstieg des Staudruckes während der Tiefenfiltrationsphase ist jedoch erheblich steiler, da sich der Porenradius infolge der gezielt eingebauten Ankerstrukturen noch schneller verengt.

Grundsätzlich ist ein hoher Staudruck ebenso wie ein schneller Anstieg des Staudruckes bei Dieselpartikelfiltern, die in Kraftfahrzeugen eingesetzt werden, unerwünscht, da dieser im Betrieb dazu führt, daß Motorleistung aufgewendet werden muß, um Abgas durch die Abgasreinigungsanlage zu drücken. Diese Motorleistung geht für den Antrieb des Fahrzeugs verloren. Die optimale Ausnutzung der Motorleistung für den Antrieb ist jedoch gleichbedeutend mit einer Erhöhung der effektiven Kraftstoffausnutzung und bedeutet Kraftstoffverbrauchsvorteile und somit auch verminderte CO₂-Emissionen des Fahrzeugs.

Es ist Aufgabe der vorliegenden Erfindung, ein Dieselpartikelfilter zur Verfügung zu stellen, das sich durch verbesserte Staudruckeigenschaften auszeichnet, ohne dabei eine verminderte Filtrationseffizienz oder verschlechterte katalytische Eigenschaften oder verschlechterte Rußzündeigenschaften zu zeigen.

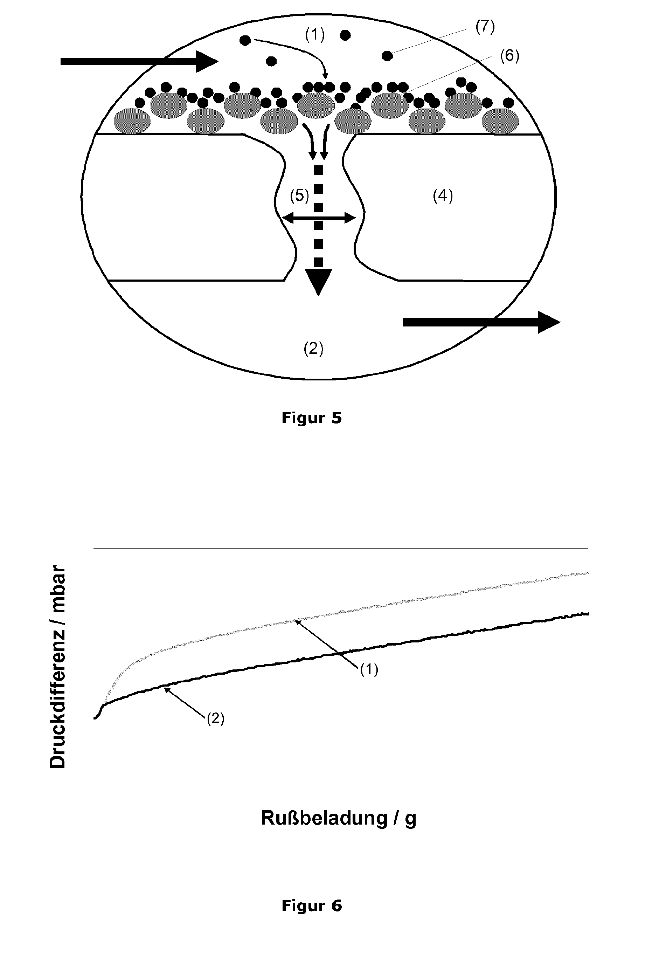

Diese Aufgabe wird gelöst durch ein Dieselpartikelfilter enthaltend ein keramisches Wandflußfiltersubstrat und eine in den Anströmkanälen aufgebrachte Beschichtung aus hochschmelzendem Material, die so beschaffen ist, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern [Figur 5].

Dies wird erreicht durch eine Beschichtung, die mehrheitlich ein oder mehrere hochschmelzende Oxide enthalten, deren Partikelgrößen den Porengrößen in der Wand des Wandflußfiltersubstrates derart angepasst wird, daß der d₅₀-Wert der Partikelgrößenverteilung der Oxide gleich oder größer dem d₅-Wert der Porengrößenverteilung des Wandflußfiltersubstrates ist, wobei zugleich der d₉₀-Wert der Partikelgrößenverteilung der Oxide gleich oder größer dem d₉₅-Wert der Porengrößenverteilung des Wandflußfiltersubstrates ist. Dabei ist unter dem d₅₀-Wert bzw. dem d₉₀-Wert der Partikelgrößenverteilung der Oxide zu verstehen, daß 50 % bzw. 90 % des Gesamtvolumens der Oxide nur solche Partikel enthält, deren Durchmesser kleiner oder gleich dem als d₅₀ bzw. d₉₀ angegebenen Wert ist. Unter d₅-Wert bzw. dem d₉₅-Wert der Porengrößenverteilung des Wandflußfiltersubstrates ist zu verstehen, daß 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

Die geforderte Funktionalität der in den Anströmkanälen aufgebrachten Beschichtung ist auch gegeben, wenn die Beschichtung mehrheitlich ein hochschmelzendes Fasermaterial enthält, das sich wie eine gasdurchlässige Matte über die Porenöffnungen legt und somit das Eindringen auch feinster Rußpartikel in die Poren signifikant erschwert bzw. im günstigsten Falle weitestgehend verhindert. Ein geeignetes Fasermaterial ist so zu wählen, daß die mittlere Länge der Fasern zwischen 50 und 250 µm beträgt und der mittlere massenbezogene Durchmesser der Fasern gleich oder kleiner dem d₅₀-Wert der Porengrößenverteilung des Wandflußfiltersubstrates ist, wobei unter d₅₀-Wert der Porengrößenverteilung des Wandflußfiltersubstrates zu verstehen ist, daß 50 % des gesamten, durch Quecksilberporosimetrie bestimmbaren Porenvolumens gebildet werden durch Poren, deren Durchmesser kleiner oder gleich dem als d₅₀ angegebenen Wert ist.

In beiden Fällen führt die Beschichtung dazu, daß die Tiefenfiltration deutlich vermindert und somit der während der Tiefenfiltrationsphase zu beobachtende Staudruckanstieg signifikant verringert wird. Figur 6 zeigt schematisch den Effekt, der durch die aufgebrachte Beschichtung erzielt wird.

Das Konzept der Staudruck-Verringerung durch Aufbringung einer die Tiefenfiltration vermindernden Beschichtung in den Anströmkanälen kann grundsätzlich auf alle Wandflußfiltersubstrate angewandt werden. Bevorzugte Ausgestaltungen der erfindungsgemäßen Bauteile enthalten Wandflußfiltersubstrate, die aus Siliciumcarbid, Cordierit oder Aluminiumtitanat gefertigt sind und die in den Wänden zwischen An- und Abströmkanälen Poren mit einem mittleren Durchmesser zwischen 5 und 50 µm, besonders bevorzugt zwischen 10 und 25 µm, aufweisen.

Die wichtigsten erfindungsgemäßen Ausführungsformen werden nachfolgend detailliert beschrieben. Die erfindungsgemäße Beschichtung, deren Funktion darin liegt, die Tiefenfiltration deutlich zu vermindern, wird im folgenden als "Overcoat" bezeichnet.

In Anspruch 2 ist ein erfindungsgemäßes Partikelfilter angegeben mit einen Overcoat, der mehrheitlich ein oder mehrere hochschmelzende Oxide enthält. Damit der Overcoat so beschaffen ist, daß die die Anströmkanäle und Abströmkanäle verbindenden Poren für Rußpartikel verschlossen werden, ohne dabei den Durchtritt der gasförmigen Abgasbestandteile zu verhindern, müssen die für den Overcoat verwendeten Materialien sorgfältig ausgewählt werden. Insbesondere müssen die zu verwendenden Oxide eine Partikelgrößenverteilung aufweisen, die der Porengrößenverteilung in der Wand des Substrats angepaßt ist. Die bestimmungsgemäße Funktion des Overcoats wird dann erfüllt, wenn der d₅₀-Wert der Partikelgrößenverteilung der Oxide gleich oder größer dem d₅-Wert der Porengrößenverteilung des Wandflußfiltersubstrates, und zugleich der d₉₀-Wert der Partikelgrößenverteilung der Oxide gleich oder größer dem d₉₅-Wert der Porengrößenverteilung des Wandflußfiltersubstrates ist. (Was unter den entsprechenden dₓ-Werten der Partikelgrößenverteilung einerseits, und der Porengrößenverteilung andererseits zu verstehen ist, wurde vorstehend bereits erläutert.) Bevorzugt werden Oxide eingesetzt, deren Partikelgrößenverteilung einen d₅₀-Wert größer oder gleich 5 µm bei einem d₉₀-Wert größer oder gleich 20 µm aufweist. Besonders bevorzugt sind Oxide mit einem d₅₀-Wert zwischen 10 und 15 µm und einem d₉₀-Wert, der zwischen 25 und 40 µm liegt. Vorzugsweise werden Oxide eingesetzt, die einen d₅₀-Wert von 10 bis 15 µm und einen d₉₀-Wert von 30 bis 35 µm aufweisen. Letztere zeichnen sich neben einer optimierten Funktionalität hinsichtlich der Verringerung der Tiefenfiltration auch durch eine besonders gute Haftung auf dem Wandflußfiltersubstrat aus.

Bei einigen Oxiden lassen sich die geforderten Partikelgrößenbereiche gut durch gezieltes Vormahlen des Oxids vor Einbringen in das Wandflußfiltersubstrat einstellen. Um diesen Vorteil umfassend nutzen zu können, werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Besonders bevorzugt sind Oxide ausgewählt aus der Gruppe bestehend aus Aluminiumoxid, Selten-Erdmetall-stabilisiertes Aluminiumoxid, Selten-Erdmetall-Sesquioxid, Zirkonoxid und Mischungen davon.

Zeolith-basierte Materialien eignen sich im allgemeinen nicht als oxidischer Overcoat, da die Partikelgrößen synthetischer Zeolithe meist mit mittleren Partikelgrößen von d₅₀ < 3 µm deutlich unter den hier geforderten Werten liegen.

Um eine möglichst optimale Funktionsweise des oxidischen Overcoats bei zugleich möglichst geringem Einfluß der die Tiefenfiltration vermindernden Beschichtung auf den Ausgangsstaudruck zu gewährleisten, wird der Overcoat bevorzugt mit einer Schichtdicke von 10 bis 150 µm, besonders bevorzugt 20 bis 100 µm in den Anströmkanälen des Wandflußfiltersubstrates aufgebracht. Für die vorstehend genannte Auswahl an möglichen oxidischen Overcoat-Materialien lassen sich entsprechende Schichtdicken bei einer Beladung von 1 bis 50 g/L Feststoff, bezogen auf das Volumen des Wandflußfiltersubstrates, darstellen. Besonders bevorzugt sind Beladungen von 1 bis 20 g/L Feststoff, ganz besonders vorteilhaft Schichtdicken von 1 bis 10 g/L Feststoff, bezogen auf das Volumen des Wandflußfiltersubstrates.

Zur Herstellung eines erfindungsgemäßen Dieselpartikelfilters mit oxidischem Overcoat wird ein geeignetes Oxid ausgewählt und in einer Menge Wasser suspendiert, die mindestens zweimal so groß ist, wie das Porenvolumen des ausgewählten Oxids. Gegebenenfalls wird die so erhaltene wässrige Suspension des Oxids mit Hilfe einer Dyno-Mühle bis zur Einstellung der geforderten Partikelgrößenverteilung vermahlen. Der Zusatz von Hilfstoffen zur Erhöhung der Sedimentationsstabilität der Suspension in diesem Stadium des Herstellprozesses ist für die Funktion des herzustellenden Overcoats unschädlich, sofern sich diese Hilfsstoffe bei der Kalzination im letzten Präparationsschritt vollständig thermisch entfernen lassen. Auch die Beimischung von haftvermittelnden Agentien wie Kieselsäure und anderen anorganischen Solen ist unschädlich und kann in einigen Ausführungsformen gegebenenfalls von Vorteil sein. Die Suspension wird nach dem gegebenenfalls erfolgten Einstellen der Partikelgrößenverteilung durch Vermahlen in die Anströmkanäle des zu beschichtenden Wandflußfiltersubstrates eingepumpt. Nach vollständigem Füllen der Anströmkanäle mit der Suspension wird die überstehende Suspension aus dem Wandflußfiltersubstrat wieder herausgesaugt. Dabei ist die Saugleistung so zu wählen, daß am Ende des Vorgangs die vorgegebene Beladungsmenge Feststoff im Anströmkanal verbleibt. Das so hergestellte beschichtete Wandflußfiltersubstrat wird bei 80 bis 180°C im Heißluftstrom getrocknet und anschließend bei 250 bis 600°C, bevorzugt bei 300 bis 500°C, kalziniert. Es ist nach Kalzination ohne weitere Behandlung einsatzfertig.

In Anspruch 6 ist ein erfindungsgemäßes Partikelfilter angegeben mit einen Overcoat, der mehrheitlich ein hochschmelzendes Fasermaterial enthält. Das Fasermaterial muß so beschaffen sein, daß es sich in den Anströmkanälen wie eine gasdurchlässige Matte über die Öffnungen der Poren in der Wand legt und somit das Eindringen auch feinster Rußpartikel in die Poren signifikant erschwert bzw. im günstigsten Falle weitestgehend verhindert. Damit dies gewährleistet ist, ist das Fasermaterial so auszuwählen, daß die mittlere Länge der Fasern zwischen 50 und 250 µm beträgt und der mittlere massenbezogene Durchmesser der Fasern gleich oder kleiner dem d₅₀-Wert der Porengrößenverteilung des Wandflußfiltersubstrates ist. Unter dem d₅₀-Wert der Porengrößenverteilung des Wandflußfiltersubstrates ist zu verstehen, daß 50 % des gesamten, durch Quecksilberporosimetrie bestimmbaren Porenvolumens gebildet werden durch Poren, deren Durchmesser kleiner oder gleich dem als d₅₀ angegebenen Wert ist. Bevorzugt werden Fasern mit einer mittleren Faserlänge von 100 bis 150 µm und einem mittleren massenbeszogenen Durchmesser der Faser von 5 bis 15 µm eingesetzt.

Das Fasermaterial muß so temperaturbeständig sein, daß es den normalen Betriebs- und Regenerationstemperaturen des Dieselpartikelfilters im Bereich von 100 bis 800°C standhält, d.h. die Schmelztemperatur der Fasern muß oberhalb von 800°C liegen. Viele Fasermaterialien, die diese technischen Anforderungen erfüllen, wie beispielsweise Asbest, Mullit, Mineralwolle mit kleinen Faserdurchmessern und Aluminiumoxidfasern, setzen carcinogene Faserstäube frei. Das Fasermaterial, das im erfindungsgemäßen Dieselpartikelfilter zum Einsatz kommt, ist daher bevorzugt auszuwählen aus der Gruppe der gesundheitlich unbedenklichen Materialien bestehend aus Steinwolle, Natursteinfaser und Mineralwolle mit Faserdurchmessern größer 5 µm. Besonders bevorzugt werden Natursteinfasern eingesetzt. Solche Natursteinfasern bestehen überwiegend aus Siliziumdioxid, Aluminiumoxid, Calcium- und Magnesiumoxid. Sie können außerdem Eisenoxid und Alkalioxide, insbesondere Kaliumoxid und Natriumoxid, enthalten. Gewonnen werden geeignete Natursteinfasern beispielsweise aus aufgeschmolzenem Basalt. Sie sind als Dämm-Materialien im Baustoffhandel in verschiedenen Formen erhältlich.

Durch die Verwendung von hochschmelzendem Fasermaterial zur Herstellung des Overcoats lassen sich die Overcoat-Schichtdicken im erfindungsgemäßen Bauteil auf 1 bis 50 µm verringern. Bevorzugt hat ein Overcoat aus hochschmelzendem Fasermaterial eine Schichtdicke von 3 bis 30 µm. Diese lassen sich mit einer Overcoat-Beladung von 1 bis 30 g/L Feststoff, bezogen auf das Volumen des Wandflußfiltersubstrates, darstellen. Besonders bevorzugt sind Beladungen von 2 bis 15 g/L Feststoff, ganz besonders vorteilhaft Beladungsmengen von 2 bis 5 g/L Feststoff, bezogen auf das Volumen des Wandflußfiltersubstrates.

Die Herstellung eines erfindungsgemäßen Dieselpartikelfilters nach Anspruch 6 erfolgt durch Suspension des Fasermaterials in einer ausreichenden Menge Wasser und Durchpumpen der Suspension von der Anströmseite durch das Wandflußfiltersubstrat. Dabei muß die in das Substrat eingepumpte Suspensionsmenge so gewählt sein, daß die darin enthaltende Fasermaterialmenge der aufzubringenden Feststoffbeladung entspricht. Zum Durchpumpen des wässrigen Suspensionsanteils durch die Wand ist ein entsprechend hoher Pumpdruck notwendig. Gegebenenfalls können der Beschichtungssuspension geringe Mengen an haftvermittelnden Hilfsstoffen zugesetzt werden, sofern deren Korngrößen groß genug sind, daß sie in den Faserzwischenräumen verbleiben und nicht in die Poren zwischen An- und Abströmkanälen eindringen. Gegebenenfalls kommen als haftvermittelnde Hilfstoffe auch Kieselsäure und andere anorganische Sole in Betracht. Nach Durchpumpen der Beschichtungssuspension wird das Wandflußfiltersubstrat bei 80 bis 180°C im Heißluftstrom getrocknet und anschließend bei 250 bis 600°C, bevorzugt bei 300 bis 500°C, kalziniert. Es ist nach Kalzination ohne weitere Behandlung einsatzfertig.

Im Vergleich zur Herstellung eines erfindungsgemäßen Dieselpartikelfilters nach Anspruch 2 darf die Beschichtungssuspension bei der Herstellung eines erfindungsgemäßen Dieselpartikelfilters mit Faser-Overcoat nicht aus den Anströmkanälen des Wandflußfiltersubstrates abgesaugt werden, da die Saugbelastung ein Aufreißen der eingebrachten Fasermatte und somit ein Freilegen von Poren zur Folge hätte. Die derart freigelegten Poren wären weiterhin zugänglich für Rußpartikel; infolgedessen würde ein erhöhtes Maß an Tiefenfiltration beobachtet, das den Staudruck mindernde Potential würde nicht vollständig ausgeschöpft.

Es wurde bereits erwähnt, daß das Konzept der Staudruck-Verringerung durch Aufbringung einer die Tiefenfiltration vermindernden Beschichtung (Overcoat) in den Anströmkanälen grundsätzlich auf alle Wandflußfiltersubstrate angewandt werden kann. Dazu zählen auch katalytisch beschichtete Wandflußfiltersubstrate oder Wandflußfiltersubstrate mit die Rußzündtemperatur absenkenden Beschichtungen.

Beispielsweise können Overcoats aus hochschmelzendem oxidischem Material oder aus hochschmelzendem Fasermaterial, wie sie vorstehend beschrieben wurden, auf Wandflußfiltersubstrate aufgebracht werden, die eine katalytisch aktive Beschichtung und/oder eine die Rußzündtemperatur absenkende Beschichtung enthalten, welche überwiegend in den Poren der Wand zwischen An- und Abströmkanälen vorliegt. Bevorzugt werden solche bereits beschichteten Wandflußfiltersubstrate mit einem Overcoat aus Fasermaterial gemäß Anspruch 6 versehen, da diese Art der die Tiefenfiltration vermindernden Beschichtung schon bei sehr dünnen Schichtdicken besonders wirksam sind. Die für eine optimale Wirksamkeit des oxidischen Overcoats nach Anspruch 2 bevorzugten Schichtdicken desselben können unter Umständen dazu führen, daß der Initialstaudruck des unberußten Teils stärker ansteigt, als eine Staudruckverminderung durch Vermeidung der Tiefenfiltration zu erzielen wäre.

Je nach Fahrzeugapplikation kann es auch vorteilhaft sein, auf ein erfindungsgemäßes Dieselpartikelfilter mit Overcoat eine zusätzliche katalytisch aktive Beschichtung oder/und eine zusätzliche, die Rußzündtemperatur absenkende Beschichtung aufzubringen. Eine solche Ausführungsform hat jedoch grundsätzlich den Nachteil, daß durch das übereinander Anordnen zweier Schichten in den Anströmkanälen der Initialstaudruck des unberußten Filters exorbitant ansteigt. Daher kommen solche Ausführungsformen nur für Sonderfahrzeugapplikationen in Frage, bei denen der Kraftstoffverbrauch nebensächlich ist, für die aber beispielsweise aufgrund geringer durchschnittlicher Betriebsbedingungen eine Rußzündung bei sehr geringen Temperaturen und/oder ein hohes Maß an kontinuierlicher Partikelfallenregeneration (CRT^{®}-Effekt) gefordert ist, so zum Beispiel für Baumaschinen und andere sogenannte "Non-Road"-Applikationen.

Für viele Fahrzeugapplikationen besonders gut geeignete Ausführungsformen erhält man, wenn man ausgehend von einem erfindungsgemäßen Dieselpartikelfilter mit oxidischem Overcoat zusätzlich eine katalytische Aktivierung der die Tiefenfiltration vermindernden Beschichtung vornimmt.

Wie vorstehend beschrieben werden die Oxide des Overcoats bevorzugt ausgewählt aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon. Diese Oxide bilden nicht selten die Basis für die Rußzündtemperatur absenkende Beschichtungen und/oder für oxidationskatalytisch oder reduktionskatalytisch aktive Beschichtungen, die dazu verwendet werden können, die im Dieselabgas außer Dieselruß enthaltenen Schadgase Kohlenmonoxid, Rest-Kohlenwasserstoffe und Stickoxide in nicht schädliche Komponenten umzuwandeln. Somit kann eine zusätzliche katalytische Aktivierung der die Tiefenfiltration vermindernden Beschichtung durch Beimischung oder Imprägnierung von oxidations- oder reduktionskatalytisch wirkenden Komponenten und/oder von Komponenten, die die Rußzündtemperatur absenken können, erreicht werden.

Die Erfindung wird nachfolgend anhand einiger Figuren und Beispiele näher erläutert.

Es zeigen:
- Figur 1:: Schematische Darstellung eines Wandflußfiltersubstrates; Figurenteil (1a) zeigt die Aufsicht auf die Stirnfläche mit wechselseitig (- in weiß dargestellt -) offenen und (- in schwarz dargestellt -) gasdicht verschlossenen Kanälen; Figurenteil (1b) zeigt einen Ausschnitt aus dem Wandflußfiltersubstrat als Prinzipskizze, die die Funktionsweise verdeutlicht; darin bezeichnen:
die Pfeile die Strömungsrichtung des Abgases;:
(1) Anströmkanal;
(2) Abströmkanal;
(3) gasdichter Verschlußstopfen;
(4) poröse, d.h. gasdurchlässige Wand.
- Figur 2:: Schematische Darstellung des Rußfiltrationsprozesses in einem Wandflußfiltersubstrat; darin bezeichnen: die Pfeile die Strömungsrichtung des Abgases;:
(1) Anströmkanal;
(2) Abströmkanal;
   Figurenteil (2a) zeigt einen vergrößerten Ausschnitt aus der Wand des Wandflußfiltersubstrates mit Pore;
   Figurenteil (2b) zeigt schematisch den Ablauf der Tiefenfiltration;
   Figurenteil (2c) zeigt schematisch den Ablauf der Filterkuchenbildung;
- Figur 3:: Schematische Darstellung der Entwicklung des Staudruckes über einem Wandflußfiltersubstrat als Funktion der aufgenommenen Rußmenge; darin bezeichnet
(1) den Anfangsstaudruck in rußfreiem Zustand
(2) den Staudruckanstieg während der Tiefenfiltrationsphase;
(3) den Staudruckanstieg während der Filterkuchenbildungsphase
- Figur 4:: Schematische Darstellung der Entwicklung des Staudruckes über unterschiedlichen Wandflußfiltersubstraten als Funktion der aufgenommenen Rußmenge; darin bezeichnet
(1) die Entwicklung des Staudruckes über einem unbeschichteten Wandflußfiltersubstrat
(2) die Entwicklung des Staudruckes über einem Wandflußfiltersubstrat mit katalytischer Beschichtung oder Rußzündbeschichtung;
(3) die Entwicklung des Staudruckes über einem Wandflußfiltersubstrat mit einer Beschichtung, die spezielle Ankerstrukturen zur Verbesserung der Filtrationseffizienz aufweist
- Figur 5:: Schematische Darstellung eines Ausschnitts eines erfindungsgemäßen Dieselpartikelfilters enthaltend ein keramisches Wandflußfiltersubstrat und eine in den Anströmkanälen (1) aufgebrachte Beschichtung (6) aus hochschmelzendem Material, die so beschaffen ist, daß sie die die Anströmkanäle (1) und die Abströmkanäle (2) verbindenden Poren (5) in der Wand (4) anströmseitig für Rußpartikel (7) verschließt, ohne dabei den Durchtritt der gasförmigen Abgasbestandteile zu verhindern.
- Figur 6:: Schematische Darstellung der Entwicklung des Staudruckes
(1) über einem Wandflußfiltersubstrat nach dem Stand der Technik ohne eine die Tiefenfiltration vermindernde Beschichtung;
(2) über einem erfindungsgemäßen Wandflußfiltersubstrat mit einer die Tiefenfiltration vermindernden Beschichtung.

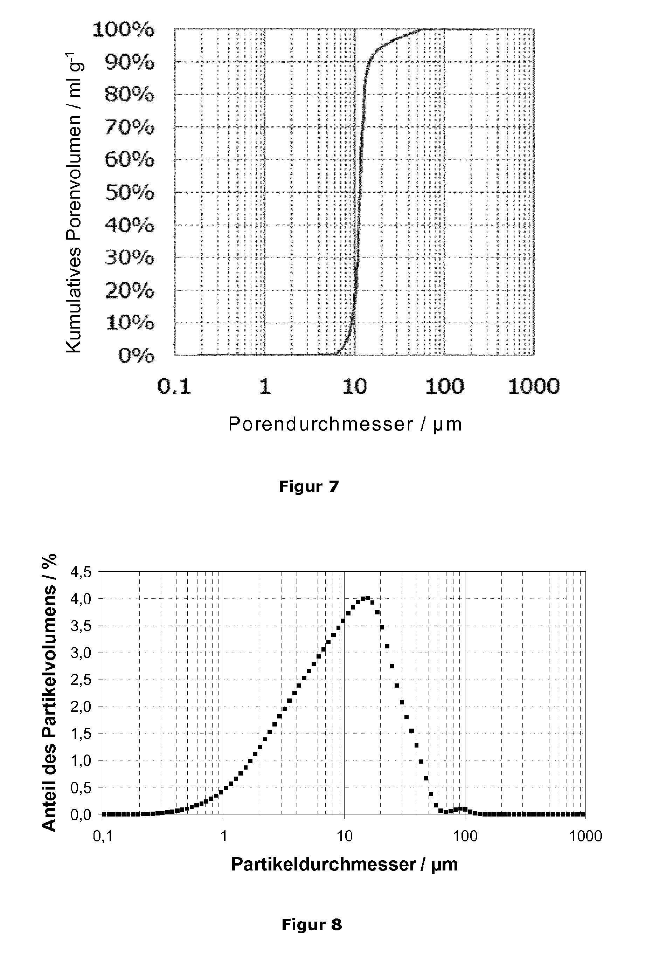

- Figur 7:: Mit Quecksilberporosimetrie bestimmte Porengrößenverteilung des keramischen Wandflußfiltersubstrates SD 031 der Fa. Ibiden in einfach-logarithmischer Auftragung
- Figur 8:: Partikelgrößenverteilung des Oxids zur Herstellung des oxidischen Overcoats aus Beispiel 2 nach Mahlung in einfach-logarithmischer Auftragung;

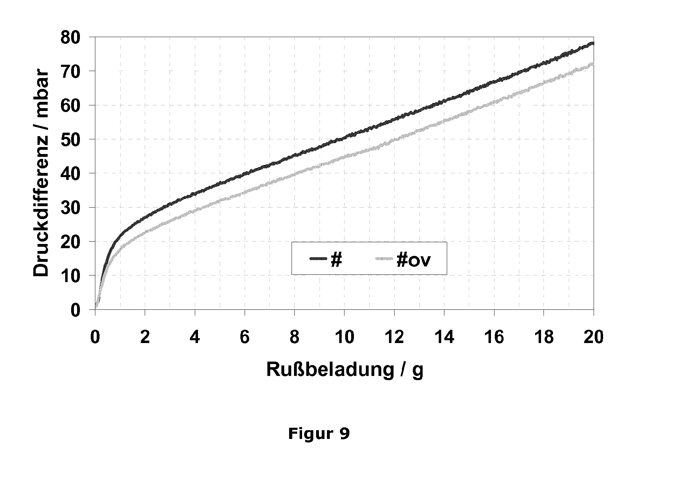

- Figur 9:: Staudruck-Vergleichsmessung des Dieselpartikelfilters ohne Overcoat (#) aus dem Vergleichsbeispiel und des Dieselpartikelfilters mit Overcoat (#ov) aus Beispiel 2, wobei beide gemessenen Kurven durch Subtraktion des um 1 verringerten Achsenabschnittswertes der Kurve für das Bauteil # ohne Overcoat korrigiert wurden.

### Beispiel 1:

Ein keramisches Wandflußfiltersubstrat SD 031 der Firma Ibiden, das die in Figur 7 angegebene Porengrößenverteilung und einen d₅₀-Wert von 10 µm zeigte, wurde mit einer Beschichtung aus hochschmelzendem Fasermaterial versehen.

Hierzu wurde ein Natursteinfasermaterial mit einer mittleren Faserlänge von 125 µm und einem mittleren massenbezogenen Durchmesser der Fasern von 9 µm in Wasser suspendiert. Nach Zusatz von ca. 5 Gew.-% Kieselsäuresol ST-OUP von Nissan Chemical, bezogen auf die Gesamtfeststoffmenge, wurde die Suspension anströmkanalseitig durch das Wandflußfiltersubstrat durchgepumpt, wobei die durch das Substrat durchgepumpte Suspensionsmenge genau die insgesamt aufzubringende Menge Fasermaterial von 5 g/L, bezogen auf das Bauteilvolumen enthielt. Das so mit einer Fasermatte versehene Bauteil wurde bei 120°C im Heizgebläse getrocknet und anschließend ebenfalls im Heizgebläse für die Dauer von einer Stunde bei 350°C kalziniert.

Das so hergestellte Filter zeigte einen gegenüber dem unbeschichteten Substrat einen deutlich verringerten Staudruckanstieg durch Tiefenfiltration, gemessen als Funktion der Rußbeladungsmenge.

### Vergleichsbeispiel:

Zur Herstellung katalytisch beschichteter Dieselpartikelfilter nach dem Stand der Technik wurden zwei keramische Wandflußfiltersubstrate aus Aluminiumtitanat der Firma Corning mit einer Beschichtung aus katalytisch aktivem Material versehen.

Hierzu wurde zunächst ein edelmetallhaltiges Pulver als katalytisch aktive Komponente der Beschichtung hergestellt. Zum Erhalt dessen wurde ein mit 3 Gew.-% Lanthansesquioxid stabilisiertes γ-Aluminiumoxid mit einem Gemisch aus einer wässrigen Lösung einer Platinvorläuferverbindung und einer wässrigen Lösung einer Palladiumvorläuferverbindung porenfüllend imprägniert, wobei die Gesamtmenge der wässrigen Lösung, mit der das γ-Aluminiumoxid behandelt wurde, so gewählt war, daß die Rieselfähigkeit des Pulvers erhalten blieb. Das aus der Imprägnierung resultierende Feuchtpulver wurde über die Dauer von 10 Stunden bei 120°C getrocknet und anschließend für vier Stunden bei 300°C kalziniert. Das fertige edelmetallhaltige Pulver enthielt 11 Gew.-% Edelmetall, bezogen auf die Pulvergesamtmenge, mit einem Platin:Palladium-Verhältnis von 2:1.

Die so gewonnene katalytisch aktive Komponente der Beschichtung wurde unter Rühren in einer Menge Wasser suspendiert, die etwa der zweieinhalbfachen Wasseraufnahme des Pulvers entsprach. Die daraus erhaltene Suspension wurde unter Zuhilfenahme einer Dyno-Mühle gemahlen, bis die Partikelgrößenverteilung einen d₁₀₀-Wert zeigte, der kleiner als 7 µm war.

Die Suspension wurde nach Einstellung eines geeigneten Feststoffgehaltes von unter 20 % durch Einpumpen in die Anströmkanäle und anschließendes Absaugen in die Wände der oben genannten Wandflußfiltersubstrate eingebracht. Die Filter wurden anschließend bei 120°C im Heizgebläse getrocknet und für die Dauer von vier Stunden bei 300°C in einem Stationärofen kalziniert. Die aufgebrachte Menge katalytisch aktiver Beschichtung betrug in den fertigen Dieselpartikelfiltern etwa 28 g/L, bezogen auf das Volumen des Bauteils.

### Beispiel 2:

Zur Herstellung eines erfindungsgemäßen Dieselpartikelfilters wurde eines der im Vergleichsbeispiel erhaltenen katalytisch beschichteten Dieselpartikelfilter mit einem oxidischen Overcoat versehen.

Zur Herstellung einer geeigneten Beschichtungssuspension für den Overcoat wurde eine geeignete Menge von mit 3 Gew.-% Lanthansesquioxid stabilisiertem Alminiumoxid unter Rühren in einer Menge Wasser suspendiert, die etwa der zweieinhalbfachen Wasseraufnahme des eingesetzen Oxids entsprach. Die so erhaltene Suspension wurde unter Zuhilfenahme einer Dyno-Mühle gemahlen, bis die Partikelgrößenverteilung einen d₅₀-Wert von ca. 10 µm (exakt: 10,35 µm) und einen d₉₀-Wert von ca. 30 µm (exakt: 29,48 µm) aufwies. Figur 8 zeigt die Partikelgrößenverteilung des fertig gemahlenen suspendierten Oxids, gemessen mit dem Partikelgrößenmeßgerät LS230 von Beckman Coulter.

Die Suspension wurde nach Einstellen eines geeigneten Feststoffgehaltes von ca. 18 % Feststoff auf eines der bereits katalytisch beschichteten Dieselpartikelfilter aus dem Vergleichsbeispiel durch Einpumpen der Beschichtungssuspension in die Anströmkanäle und anschließendes Absaugen aufgebracht. Das Filter wurde anschließend bei 120°C im Heizgebläse getrocknet, und für die Dauer von vier Stunden bei 350°C in einem Stationärofen kalziniert. Die dem Overcoat zuzuordnende Beladungsmenge im fertigen Dieselpartikelfilter betrug 5 g/L bezogen auf das Volumen des Bauteils.

Das Staudruck-Verhalten unter Rußbeladung wurde vergleichend am im Vergleichsbeispiel hergestellten katalytisch beschichteten Dieselpartikelfilter nach dem Stand der Technik und am erfindungsgemäßen Dieselpartikelfilter aus Beispiel 2 untersucht. Die Aufnahme der Staudruck-Kurven während der beladung der Filter mit Ruß erfolgte mit dem "Diesel Particulate Generator" DPG der Firma Cambustion, dessen Meßprinzip und -methodik dem Fachmann geläufig ist, unter den vom Lieferanten des Geräts empfohlenen Standardbedingungen.

Figur 9 zeigt das Ergebnis der vergleichenden Untersuchung des Staudruckes als Funktion der aufgenommenen Rußmenge. # bezeichnet das Dieselpartikelfilter ohne Overcoat aus dem Vergleichsbeispiel, #ov das Dieselpartikelfilter mit Overcoat aus Beispiel 2. In Figur 9 wurden beide gemessenen Kurven durch Subtraktion des um 1 verringerten Achsenabschnittswertes der Kurve für das Bauteil # ohne Overcoat korrigiert, um den direkten Einfluß des Overcoats zu zeigen.

Es ist deutlich zu erkennen, daß das Filter mit Overcoat #ov ausgehend vom gleichen Initialstaudruck einen erheblich geringeren Anstieg im auf die Tiefenfiltration zurückzuführenden Bereich der Staudruckkurve zeigt. Die beobachtete Staudruck-Differenz zwischen dem Dieselpartikelfilter mit Overcoat und dem Dieselpartikelfilter ohne Overcoat beträgt ca. 6 mbar.

## Patentansprüche

1. Dieselpartikelfilter enthaltend ein keramisches Wandflußfiltersubstrat und eine in den Anströmkanälen aufgebrachte Beschichtung aus hochschmelzendem Material, die so beschaffen ist, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern, das hergestellt ist durch ein Verfahren mit den folgenden Verfahrensschritten:
a. Suspendieren eines Oxids in einer Menge Wasser, die mindestens zweimal so groß ist, wie das Porenvolumen des Oxids:
b. Mahlen der in Schritt a. erhaltenen wässrigen Suspension, bis das Oxid eine Partikelgrößenverteilung aufweist, die der Porengrößenverteilung in der Wand des Wandflußfiltersubstrates angepaßt ist:
c. Einpumpen der erhaltenen Suspension in die Anströmkanäle des Wandflußfiltersubstrates, bis diese vollständig mit Suspension gefüllt sind;
d. Heraussaugen überstehender Suspension aus dem Wandflußfiltersubstrat, wobei die Saugleistung so zu wählen ist, daß am Ende des Vorgangs eine vorgegebene Beladungsmenge Feststoff im Anströmkanal verbleibt;
e. Trocknung des aus Schritt d. resultierenden Wandflußfiltersubstrates im Heißluftstrom bei 80 bis 180°C;
f. Kalzination des aus Schritt e. resultierenden Wandflußfiltersubstrates bei 250 bis 600°C.

2. Dieselpartikelfilter nach Anspruch 1,
**dadurch gekennzeichnet,**
**daß** das Mahlen in Schritt b. erfolgt, bis der d₅₀-Wert der Partikelgrößenverteilung des Oxids gleich oder größer dem d₅-Wert der Porengrößenverteilung des Wandflußfiltersubstrates ist,
wobei zugleich der d₉₀-Wert der Partikelgrößenverteilung des Oxids gleich oder größer dem d₉₅-Wert der Porengrößenverteilung des Wandflußfiltersubstrates ist,
wobei unter dem d₅₀-Wert bzw. dem d₉₀-Wert der Partikelgrößenverteilung des Oxids zu verstehen ist, daß 50 % bzw. 90 % des Gesamtvolumens des Oxids nur solche Partikel enthält, deren Durchmesser kleiner oder gleich dem als d₅₀ bzw. d₉₀ angegebenen Wert ist, und wobei unter d₅-Wert bzw. dem d₉₅-Wert der Porengrößenverteilung des Wandflußfiltersubstrates zu verstehen ist, daß 5 % bzw. 95 % des gesamten, durch Quecksilberporosimetrie bestimmbaren Porenvolumens gebildet werden durch Poren, deren Durchmesser kleiner oder gleich dem als d₅ bzw. als d₉₅ angegebenen Wert ist.

3. Dieselpartikelfilter nach Anspruch 2,
**dadurch gekennzeichnet,**
**daß** das Oxid nach Mahlen eine Partikelgrößenverteilung mit einen d₅₀-Wert größer oder gleich 5 µm bei einem d₉₀-Wert größer oder gleich 20 µm aufweist.

4. Dieselpartikelfilter nach einem der Ansprüche 1 bis 3,
**dadurch gekennzeichnet,**
**daß** das Oxid ausgewählt sind aus der Gruppe bestehend aus Aluminiumoxid, Selten-Erdmetall-stabilisiertes Aluminiumoxid, Selten-Erdmetall-Sesquioxid, Titandioxid, Zirkonoxid, Cer-Zirkon-Mischoxid, Vanadiumpentoxid, Vanadiumtrioxid, Wolframtrioxid, Molybdäntrioxid und Mischungen davon.

5. Dieselpartikelfilter nach einem der Ansprüche 1 bis 3,
**dadurch gekennzeichnet,**
**daß** das Wandflußfiltersubstrat aus Siliziumcarbid, Cordierit oder Aluminiumtitanat gefertigt ist und die Wände zwischen An- und Abströmkanälen Poren mit einem mittleren Durchmesser zwischen 5 µm und 50 µm aufweisen.

6. Dieselpartikelfilter nach Anspruch 5,
**dadurch gekennzeichnet,**
**daß** das Wandflusfiltersubstrat eine katalytisch aktive Beschichtung und/oder eine die Rußzündtemperatur absenkende Beschichtung enthält, welche überwiegend in den Poren der Wand zwischen An- und Abströmkanälen vorliegt.

7. Dieselpartikelfilter nach einem der Ansprüche 1 bis 3,
**dadurch gekennzeichnet,**
**daß** der in Schritt b. erhaltenen Suspension vor Ausführung des Schrittes c. Hilfsstoffe zur Erhöhung ihrer Sedimentationsstabilität zugesetzt werden, wobei diese Hilfsstoffe so gewählt sind, daß sie sich bei der Kalzination in Schritt f. vollständig thermisch entfernen lassen.

8. Dieselpartikelfilter nach einem der Ansprüche 1 bis 3,
**dadurch gekennzeichnet,**
**daß** der in Schritt b. erhaltenen Suspension vor Ausführung des Schrittes c. haftvermittelnde Agentien wie Kieselsäure und andere anorganische Sole zugesetzt werden.

9. Dieselpartikelfilter nach Anspruch 1,
**dadurch gekennzeichnet,**
**daß** die in Schritt d. vorgegebene Beladungsmenge 1 bis 50 g/L Feststoff, bezogen auf das Volumen des Wandflußfiltersubstrats, beträgt.

10. Dieselpartikelfilter nach Anspruch 1 oder 9,
**dadurch gekennzeichnet,**
**daß** die Schichtdicke der aus Schritt d. resultierenden Beschichtung in den Anströmkanälen des Wandflußfiltersubstrates nach der Behandlung in den Schritten e. und f. 10 bis 150 µm beträgt

11. Dieselpartikelfilter nach Anspruch 1,
**dadurch gekennzeichnet,**
**daß** die Beschichtung aus hochschmelzendem Material, die so beschaffen ist, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern, katalytisch aktiviert ist durch Beimischung oder Imprägnierung von oxidations- oder reduktionskatalytisch wirkenden Komponenten und/oder Komponenten, die die Rußzündtemperatur absenken können.

12. Dieselpartikelfilter nach Anspruch 1,
**dadurch gekennzeichnet,**
**daß** auf die Beschichtung aus hochschmelzendem Material, die so beschaffen ist, daß sie die die Anströmkanäle und Abströmkanäle verbindenden Poren in der Wand anströmseitig für Rußpartikel verschließt, ohne dabei den Durchtritt der gasförmigen Abgasbestandteile zu verhindern, eine zusätzliche katalytisch aktive Beschichtung und/oder eine zusätzliche, die Rußzündtemperatur absenkende Beschichtung aufgebracht ist.

13. Verwendung des Dieselpartikelfilters nach einem der Ansprüche 1 bis 12 zur Entfernung von Dieselruß aus dem Abgas von Dieselmotoren.
